Europäisches Patentamt

European Patent Office

Office européen des brevets

Publication number: **0 274 769**
**A1**

## EUROPEAN PATENT APPLICATION

Application number: 87202095.3

Int. Cl.⁴ **A01G 9/02**

Date of filing: 30.10.87

Priority: **17.12.86 BE 217550**

Date of publication of application:
**20.07.88 Bulletin 88/29**

Designated Contracting States:
**CH DE FR GB LI NL**

Applicant: **N.V. THOVADEC PLASTICS S.A.**
**Meerstraat, 79**
**B-9210 Heusden(BE)**

Inventor: **Van Helleputte, Gino**
**Tulpenhof 1**
**B-9230 Melle(BE)**

Representative: **Pieraerts, Jacques et al**
**Bureau Gevers S.A. rue de Livourne 7 bte 1**
**B-1050 Bruxelles(BE)**

Cultivation pot, notably cultivation pot for seedlings, cuttings or bedded-out plants.

That material the cultivation pot is manufactured from, is provided locally with weakening lines (5 and 6) in such a way that the cultivation pot tears open due to the root development, along some of said weakening lines (5 and 6) at least, which makes possible the further unimpeded root growth.

Fig.1.

EP 0 274 769 A1

## Cultivation pot, notably cultivation pot for seedlings, cuttings or bedded-out plants.

This invention relates to a cultivation pot, notably a cultivation pot for seedlings, cuttings or bedded-out plants.

Small cultivation pots from plastic with closed or partly-open walls are more and more used in the horticulture, mainly for the further cultivation of bedded-out plants. Seedlings may also be cultivated in such pots.

The development of the roots generally occurs fast, whereby the earth inside the cultivation pot is so compacted that further grow of the roots is strongly checked or disturbed. In some cases, the rootlets develop in such large number that they form a ball from intertwined rootlets which can no more or any way insufficiently further develop as they are planted-out thereafter. In this latter case, the planting-out should be made at the right time, if the further plantlet growth is to be insured.

Even when use is made of cultivation pots in the form of "small baskets", that is cultivation pots with open walls, the normal growth of the plantlets in a larger cultivation pot or in open ground may be checked because the heavier roots are strongly disturbed during the development thereof.

The invention has now for object to design a new and original cultivation pot which does not have the above and other disadvantages of the present cultivation pots.

To obtain this according to the invention, that material the cultivation pot is manufactured from, is provided locally with weakening lines in such a way that the cultivation pot tears open due to the root development, along some of said weakening lines at least, which makes possible the further unimpeded root growth.

In a preferred embodiment, when use is made of cultivation pots with partly-open walls, said open walls are formed by discrete material strips which extend between a top ring and a bottom, whereby said weakening lines are provided at least in said ring.

Other details and advantages of the invention will stand out from the following description of a cultivation pot according to the invention, given by way of non limitative example and with reference to the accompanying drawings, in which:

Figure 1 is a front view of a cultivation pot in a first embodiment thereof.

Figure 2 is a front view of a cultivation pot according to a second possible embodiment.

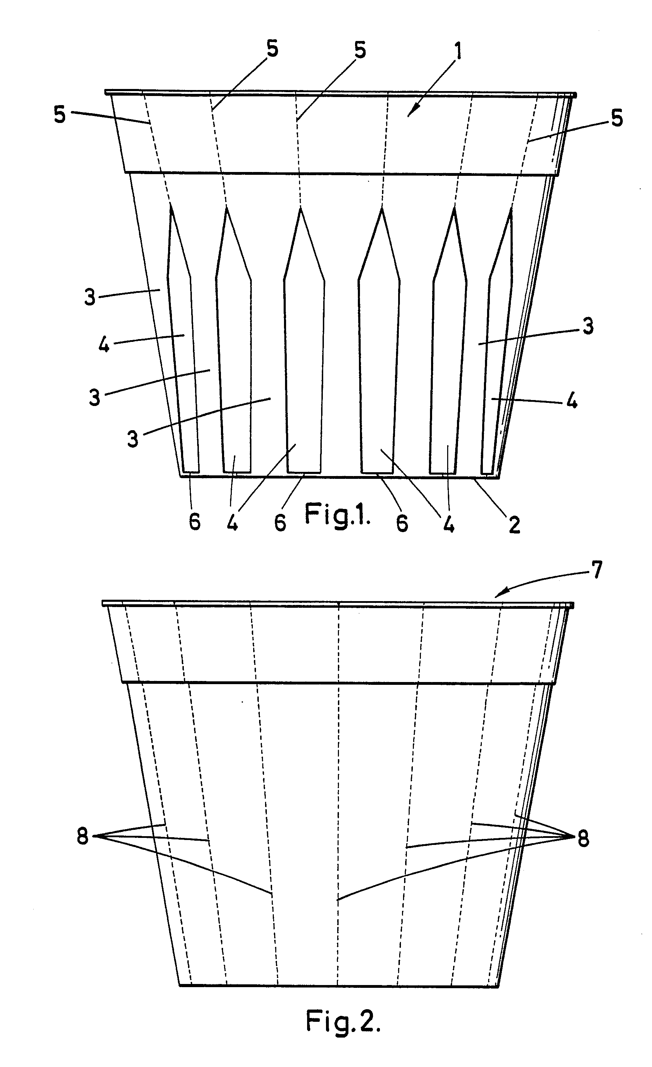

Before proceeding with the description of the cultivation pots according to the invention, it will be made quite clear that the dimensions thereof do not play any part whatsoever. Indeed when the cultivation pot as shown in figure 1 is mostly produced in a much smaller size, nothing is changed to the invention principle when the pots are shown in figures 1 and 2 on the same scale.

The cultivation pot as shown in figure 1 has a so-called open wall and is comprised of a ring 1 and a bottom 2, open or not. Between the ring 1 and bottom 2, a series strips 3 extend wherebetween oblong open spaced 4 may be noticed. The specific shape of said open spaces 4 is not characteristic for the invention, while to the contrary the weakening lines 5 which run at the top between two strips 3 are very characteristic for the invention.

At the bottom, small weakening lines 6 are provided which also run through the plane of bottom 2 to the center thereof.

In the embodiment as shown in figure 2, which pertains to a cultivation pot 7 with closed wall, the weakening lines 8 run from the top of the cultivation pot to the bottom thereof.

Both embodiments thus have the same characteristic and provide the same advantage, namely that they can tear open with the root development of plantlets which are being grown in such cultivation pots. There is no requirement for the cultivation pots to tear along all of the weakening lines. It is sufficient for some such lines tearing under the pressure of the growing roots, to provide space for said roots to reach the surrounding earth.

As already stated hereinabove, the cultivation pot as shown in figure 1 belongs to that type which is generally produced with a small size and which is being used for planting-out seedlings, cuttings, etc., when they have grown enough, complete with cultivation pot, either in larger cultivation pots or in open earth.

The invention is naturally not limited to the above-described embodiment and many changes might be brought therein without departing from the scope of the invention.

## Claims

1. Cultivation pot, notably cultivation pot for seedlings, cuttings or bedded-out plants, characterized in that that material the cultivation pot is manufactured from, is provided locally with weakening lines (5 and 6) in such a way that the cultivation pot tears open due to the root development, along some of said weakening lines (5 and 6) at least, which makes possible the further unimpeded root growth.

2. Cultivation pot as defined in claim 1, characterized in that it has closed walls.

3. Cultivation pot as defined in claim 1, characterized in that it has partly-open walls.

4. Cultivation pot as defined in claim 3, characterized in that said open walls are formed by discrete material strips (3) which extend between a top ring (1) and a bottom (2), whereby said weakening lines are provided at least in said ring (1).

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 008 544 (W.E.F. RUPPRECHT et al.) <br> * complete document * | 1,3 | A 01 G 9/02 |
| Y | | 2 | |
| X | FR-A-2 352 489 (M. METRAL) <br> * complete document * | 1,3 | |
| A | | 4 | |
| Y | DE-U-1 907 612 (WIEPA-FABRIK, M. ULLMANN) <br> * page 2, paragraph 2 * | 2 | |

TECHNICAL FIELDS
SEARCHED (Int. Cl.4)

A 01 G 9/00

The present search report has been drawn up for all claims

| Place of search | Date of completion of the search | Examiner |
|---|---|---|
| BERLIN | 09-03-1988 | WUNDERLICH J E |

EPO FORM 1503 03.82 (P0401)